# EUROPEAN PATENT APPLICATION

(11) **EP 4 129 508 A1**
(43) Date of publication of application: **08.02.2023**
(21) Application number: 21779075.7
(22) Date of filing: 30.03.2021
(51) Int. Cl.: B09B 3/00, H01M 10/54

(54) **HEAT TREATMENT METHOD FOR BATTERY-WASTE AND LITHIUM RECOVERY METHOD**

(30) Priority: 31.03.2020 JP 2020064927
(71) Applicant: JX Nippon Mining & Metals Corporation, Tokyo 105-8417 (JP)
(72) Inventor: MIYANAGA, Hiroshi, Hitachi-shi, Ibaraki 317-0056 (JP); GODA, Tomonari, Hitachi-shi, Ibaraki 317-0056 (JP)
(74) Representative: Arnold & Siedsma
(86) International application number: PCT/JP2021/013724
(87) International publication number: WO 2021/201055

(57) **Abstract**

A method for heat-treating battery waste containing lithium includes: allowing an atmospheric gas containing oxygen and at least one selected from the group consisting of nitrogen, carbon dioxide and water vapor to flow in a heat treatment furnace in which the battery waste is arranged, and heating the battery waste while adjusting an oxygen partial pressure in the furnace.

## Description

### FIELD OF THE INVENTION

This specification discloses a technique relating to a heat treatment method for battery waste containing lithium and a lithium recovery method.

### BACKGROUND OF THE INVENTION

For example, vehicles such as hybrid vehicles, fuel cell vehicles, and electric vehicles are each equipped with a battery that supplies power to an electric motor as a drive source. In order to allow the battery to function effectively, a vehicle battery pack is typically used, as described in Patent Literatures 1 to 5. The vehicle battery pack is configured such that an ECU for controlling the battery, a cooling device for cooling the battery, and many electrical components such as various sensors for measuring the battery state are packaged as one package, and the package is housed in a casing.

For the battery of such a vehicle battery pack, a secondary battery capable of storing electricity by charging and of repeated use, especially a nickel hydrogen battery, has generally been used. In recent years, a lithium ion battery has been used which employs a lithium transition metal composite oxide for a cathode. In particular, the lithium ion battery contains valuable metals such as cobalt, and if the vehicle battery pack is disposed after use, it is desirable that the valuable metals contained in such waste is easily recovered for recycling at a relatively low cost, in terms of effective use of resources.

### CITATION LIST

### Patent Literatures

[Patent Literature 1] Japanese Patent No. 4917307 B
[Patent Literature 2] U.S. Patent Application Publication No. 2007/0141454 A1
[Patent Literature 3] Japanese Patent No. 4955995 B
[Patent Literature 4] Japanese Patent No. 5464357 B
[Patent Literature 5] Japanese Patent Application Publication No. 2006-179190 A

### SUMMARY OF THE INVENTION

### Technical Problem

For example, when lithium is recovered from the vehicle battery pack waste or other battery waste containing lithium as a cathode or the like, it is considered that the battery waste is subjected to a heat treatment by heating it in a heat treatment furnace, and then crushed and sieved to obtain lithium in the powder obtained from the battery waste (hereinafter referred to as "battery powder"), which is leached into water.

Here, by the heat treatment, lithium in lithium compounds such as lithium composite oxides that may be contained in battery waste can be converted to the form of lithium carbonate which will easily be leached into water.

However, when the battery waste is heat-treated in a high-concentration of nitrogen atmosphere that is substantially free of oxygen in a heat treatment furnace, the oxygen required for generating lithium carbonate becomes insufficient, so that lithium may not be sufficiently converted to lithium carbonate. In this case, a leaching rate of lithium decreases during leaching by water, which also reduces a recovery rate of lithium.

The specification discloses a method for heat-treating battery waste and a method for recovering lithium, which can stably generate lithium carbonate.

### Solution to Problem

The heat treatment method for battery waste disclosed in this specification is a method for heat-treating battery waste containing lithium, the method comprising: allowing an atmospheric gas comprising oxygen and at least one selected from the group consisting of nitrogen, carbon dioxide and water vapor to flow in a heat treatment furnace in which the battery waste is arranged, and heating the battery waste while adjusting an oxygen partial pressure in the furnace.

Further, the lithium recovery method disclosed in this specification is a method for recovering lithium from battery waste containing lithium, the method comprising: a heat treatment step of heat-treating the battery waste by the method for heat-treating the battery waste as described above; and a lithium leaching step of leaching lithium in battery powder obtained from the battery waste after the heat treatment step by either a weakly acidic solution, water or an alkaline solution.

### Advantageous Effects of Invention

According to the method for heat-treating battery waste as described above, lithium carbonate can be stably produced.

### BRIEF DESCRIPTION OF THE DRAWINGS

FIG. 1 is a flow chart showing an example of a method for recovering lithium including a heat treatment step by a method for heat-treating battery waste according to an embodiment; and
FIG. 2 is a graph showing changes over time in temperature during a heat treatment of a vehicle battery pack waste in an embodiment.

### DETAILED DESCRIPTION OF THE INVENTION

Hereinafter, embodiments of the method for heat-treating battery waste and the method for recoverying lithium will be described in detail.

A method for heat-treating battery waste according to an embodiment includes a heat treatment step of allowing an atmospheric gas containing oxygen and at least one selected from the group consisting of nitrogen, carbon dioxide, and water vapor to flow in a heat treatment furnace in which the battery waste is arranged, and heating the battery waste while adjusting an oxygen partial pressure in the furnace. Here, it is preferable to target, as the battery waste, a vehicle battery pack waste including a case forming an exterior and a battery surrounded by the case, which contains lithium.

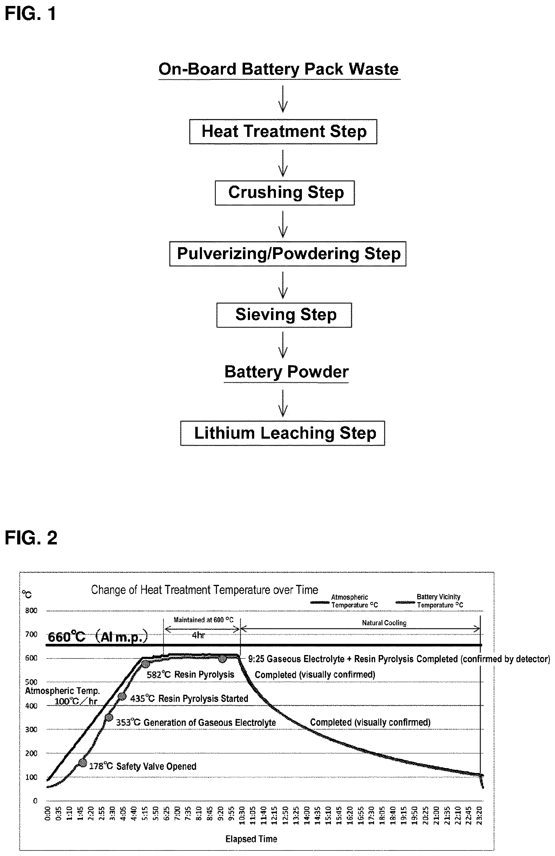

After the heat treatment step, as illustrated in FIG. 1, a lithium leaching step may optionally be carried out, which leaches lithium in battery powder by water, the battery powder being obtained by performing a crushing step and a sieving step on the vehicle battery pack waste as the battery waste after the heat treatment. By the step, the lithium contained in the vehicle battery pack waste can be recovered.

### (Battery Waste)

The battery waste can be vehicle battery waste or consumer electronics battery waste. In this embodiment, the battery waste is, for example, the waste of vehicle battery pack mounted on vehicles such as hybrid vehicles, fuel cell vehicles and electric vehicles. More particularly, the battery waste is vehicle battery pack waste that has been discarded due to scrapped vehicles, replacement of vehicle battery packs, manufacturing defects or other reasons, and the use of such vehicle battery pack waste can achieve effective utilization of resources. However, the waste of batteries used in electronic devices or equipment may be targeted.

The vehicle battery pack generally includes a metal case forming a housing around the case, and a battery having a plurality of battery cells and other components that are housed inside the case. The components inside the case include a control device such as an ECU for controlling the battery, a cooling device that circulates cooling air inside the case to suppress an increase in battery temperature during discharging or charging of the battery, various sensors for measuring the temperature and the like to observe the state of the battery and other required electrical components.

There are vehicle battery packs having various shapes, depending on the space constraints of the vehicles on which they are mounted. For example, there is a vehicle battery pack having a vertically long outer shape which is longer in one direction, such as a rectangular parallelepiped shape that is substantially rectangular in a plane view.

Used as the battery housed inside the vehicle battery pack are a nickel-cadmium battery, a nickel-hydrogen battery, a lithium ion battery, and the like, which can be repeatedly charged and used.

Of these, the lithium ion battery typically includes: a cathode in which a cathode active material composed of one or more single metal oxides of lithium, nickel, cobalt and manganese, or two or more composite metal oxides is applied and fixed onto an aluminum foil (a cathode substrate) via, for example, an organic binder such as polyvinylidene fluoride (PVDF); a anode made of a carbon-based material; and an organic electrolytic solution such as ethylene carbonate or diethyl carbonate or other electrolyte. In particular, it includes valuable metals such as cobalt as metals making-up the cathode, so that it is desirable to recover these valuable metals from the waste in terms of effective use of resources.

### (Heat Treatment Step)

It is not easy to dismantle the vehicle battery pack waste as described above because it has a robust structure in which the circumference is protected by the case made of a metal or the like. If it is disassembled, there is a risk of electric shock due to residual voltage.

Therefore, in the heat treatment step, the vehicle battery pack waste is subjected to a heat treatment while maintaining the structure in which the battery or the like is surrounded by the case, without disassembling the battery pack. This can reduce the time required for disassembling work. Further, even if the vehicle battery pack waste is not discharged, for example by immersing it in a predetermined liquid, there is no risk of electric shock in the heat treatment.

In particular, here, when heat-treating the vehicle battery pack waste placed in the heat treatment furnace, an atmosphere gas containing oxygen and at least one selected from the group consisting of nitrogen, carbon dioxide and water vapor is allowed to flow in the heat treatment furnace to adjust an oxygen partial pressure in the furnace. It is preferable that the inert gas containing a relatively small amount of oxygen mainly contains nitrogen, because properties of the battery powder after the heat treatment can be made uniform when the treatment scale is increased.

By allowing the atmospheric gas mainly containing nitrogen, carbon dioxide and/or water vapor to flow in the heat treatment furnace, the oxygen partial pressure in the furnace is maintained at a low level to some extent. This prevents the explosive combustion of the flammable organic electrolyte existing inside the case of the vehicle battery pack waste, so that the vehicle battery pack waste can be prevented from exploding and the vehicle battery pack waste can be controlled at a desired temperature. As a result, it is possible to effectively prevent the melting of aluminum such as aluminum foil. When aluminum is melted, valuable metals such as cobalt and nickel are incorporated into the melted aluminum, which can be then separated and removed together with the solidified aluminum in a sieving step as described below. Here, this can be prevented, so that the recovery rate of valuable metals can be improved.

Further, if the temperature can be controlled while the partial pressure of oxygen in the furnace is relatively low, it is possible to suppress the formation of powdery lithium aluminate due to the reaction of aluminum with lithium oxide. The formation of lithium aluminate, which is promoted at an elevated temperature and under higher oxygen partial pressure, will lead to a decreased leaching rate of lithium in a lithium leaching step as described below, because lithium aluminate has a lower solubility in water than lithium carbonate. The aluminum foil that has not react with lithium aluminate can be easily separated in the sieving step. When lithium aluminate is produced, the aluminum foil becomes brittle and easily contaminated into the battery powder in the subsequent sieving step. Therefore, it is important to carry out the heat treatment under conditions that do not generate lithium aluminate as much as possible.

Further, the low partial pressure of oxygen in the furnace during the heat treatment suppresses the production of nickel oxide and cobalt oxide, and promotes the production of cobalt and nickel, which are metals that are more soluble in acids, thus enabling a decrease in the recovery rate of valuable metals to be effectively suppressed.

On the other hand, when the oxygen partial pressure in the furnace is extremely low, the production of lithium carbonate by the heat treatment is not promoted. If lithium carbonate, which is easily leached into water, is not sufficiently produced, the leaching rate of lithium in the lithium leaching step decreases, and eventually the recovery rate of lithium decreases. It is presumed that the production of lithium carbonate by the heat treatment is carried out by the reaction of oxygen, carbon contained in the anode of the lithium ion battery and the like, and lithium. The oxygen can also be contained in the oxide of the cathode, but its amount is lower, and it cannot be said that it is sufficient to convert a large amount of lithium in the waste of the vehicle battery pack to lithium carbonate. On the other hand, in this embodiment, the production of lithium carbonate is promoted by adjusting the oxygen partial pressure in the furnace by containing a relatively small amount of oxygen in the atmospheric gas.

More particularly, it is preferable to maintain the oxygen partial pressure in the furnace during heating within a range of 5 × 10⁻⁴ atm to 4 × 10⁻² atm by allowing the atmospheric gas to flow in the heat treatment furnace. By maintaining the partial pressure of oxygen in the furnace within such a range, it is possible to further promote the production of lithium carbonate while increasing the recovery rate of valuable metals as described above. In order to produce lithium carbonate, the partial pressure of oxygen in the furnace during heating can be at least higher than 0 atm.

When the partial pressure of oxygen in the furnace during heating is 1 × 10⁻² atm or less, embrittlement of aluminum in the battery waste can be suppressed. If aluminum is embrittled during the heat treatment, the separability of aluminum may be deteriorated during sieving which will be described below.

The oxygen partial pressure in the furnace can be measured by a zirconia oxygen analyzer. The above-mentioned range of the oxygen partial pressure in the furnace means that at least a measured value of the oxygen partial pressure in the furnace measured at the time when the oxygen partial pressure in the furnace can be measured may be within that range. For example, when the organic electrolytic solution volatilizes, the oxygen partial pressure may not be measurable, but the oxygen partial pressure in the furnace at such a time when the measurement is impossible does not matter.

Further, from the viewpoint of improving the recovery rate of valuable metals and promoting the production of lithium carbonate, the concentration of oxygen in the inert gas when introduced into the heat treatment furnace is preferably 0.05% by volume to 4.00% by volume.

Further, the flow rate of the atmospheric gas in the heat treatment furnace is preferably 6 m³/hr to 60 m³/hr. If the flow rate of the inert gas is too high, the temperature distribution during the heat treatment becomes large, so that the heat treatment may not be possible at the optimum temperature. On the other hand, if the flow rate of the inert gas is too low, the oxygen partial pressure distribution during the heat treatment becomes large, so that the heat treatment may not be possible at the optimum oxygen partial pressure. From the point of view, the flow rate of the atmospheric gas is preferably 6 m³/hr to 60 m³/hr.

When heating the vehicle battery pack waste while adjusting the oxygen partial pressure in the furnace and allowing the inert gas as described above to flow in the heat treatment furnace, the highest temperature of the vehicle battery pack waste is preferably 500 °C to 650 °C. If the highest temperature of the vehicle battery pack waste is too low, there are concerns that the decomposition of the lithium metal oxide in the vehicle battery pack waste and the reduction of nickel oxide and cobalt oxide obtained after the decomposition will become insufficient, the production of lithium carbonate is not promoted as expected, and the removal of the organic electrolyte and the decomposition of polyvinylidene fluoride or polypropylene/polyethylene do not sufficiently take place. On the other hand, if the highest temperature of the vehicle battery pack waste is too high, aluminum may be melted or lithium aluminate may be produced.

For example, a temperature increasing rate until it reaches the highest temperature is preferably 50 °C/hr to 150 °C/hr. If the temperature increasing is too slow, the heat treatment requires a longer period of time, so that the treatment does not proceed, and the equipment becomes large. On the other hand, if the temperature increasing is too fast, it is expected that gasification of the electrolytic solution and pyrolysis gases of PVDF and of PE and PP which are generally used as separators, will be generated at once, causing the cell to burst.

Further, the time for maintaining the highest temperature as described above is preferably 4 hours to 8 hours. The subsequent cooling may be natural cooling, but for example, when water cooling or a water cooling jacket is used, or when forced cooling is performed by allowing a large amount of inert gas to flow, there is an advantage that the equipment can be miniaturized.

In the heat treatment step as described above, examples of the heat treatment furnace that can be used herein include an atmospheric electric furnace or an atmospheric muffle furnace for a batch type, or a roller hearth kiln or a mesh belt kiln for a continuous type. Among them, the roller hearth kiln is preferable because it is suitable for high-throughput processing.

It is preferable that the flammable organic electrolytic solution that has been evaporated and removed from the interior of the case of the vehicle battery pack waste is introduced into a secondary combustion furnace and burned there by a burner or the like to make it harmless.

### (Crushing Step, Pulverizing/Powdering Step, Sieving Step)

After the heat treatment step as described above, a crushing step, a pulverizing/powdering step, and a subsequent sieving step may optionally be carried out.

The crushing is carried out in order to take out the battery from the case of the vehicle battery pack waste, destroy the housing of the battery, and selectively separate the cathode active material from the aluminum foil coated with the cathode active material. Here, various known devices or apparatuses can be used, and specific examples include an impact type crusher that can crush the vehicle battery pack waste or batteries by applying an impact while cutting the waste or the batteries, including, for example, a sample mill, a hammer mill, a pin mill, a wing mill, a tornado mill, a hammer crusher and the like. A screen can be installed at an outlet of the crusher, whereby the batteries are discharged from the crusher through the screen when they are crushed to a size enough to allow it to pass through the screen.

After crushing, the crushed batteries are lightly pulverized into powder and then sieved using a sieve having an appropriate opening. The pulverizing and powdering improve the separability of the cathode active material fixed to the aluminum foil from the aluminum foil. Thus, for example, aluminum, copper or the like remains on the sieve, and battery powder containing lithium, cobalt, nickel or the like from which aluminum, copper or the like has been removed to some extent can be obtained under the sieve.

### (Lithium Leaching Step)

The battery powder obtained through the above heat treatment step and, optionally, crushing and sieving, is brought into contact with either a weakly acidic solution, water or an alkaline solution in a lithium dissolution step to dissolve the lithium contained in the battery powder in the solution. A preferred pH is 2 < pH < 13, and more preferably 3 < pH < 12.

In the heat treatment step as described above, the lithium contained in the vehicle battery pack waste is sufficiently converted to lithium carbonate. Therefore, in the lithium leaching step, lithium carbonate contained in the battery powder can be easily leached into either the weakly acidic solution, water or the alkaline solution. On the other hand, other metals that may be contained in the battery powder are substantially insoluble in the weakly acidic solution and further insoluble in water or the alkaline solution. This can effectively separate the lithium contained in the battery powder from the other metals in the lithium leaching step.

There is no limitation of a type of acid used in the weakly acidic solution to be brought into contact with the battery powder, but it is typically a sulfuric acid solution. Also, there is no limitation of a type of alkali used in the alkaline solution to be brought into contact with the battery powder, but it is typically sodium hydroxide or calcium hydroxide. In the treatment of waste LIB, lithium hydroxide may be used. Further, the water brought into contact with the battery powder is specifically tap water, industrial water, distilled water, purified water, ion exchange water, pure water, ultrapure water, or the like.

The lithium-dissolved solution obtained after dissolving lithium has a high pH due to the dissolution of lithium. Therefore, an acid such as sulfuric acid may be added to the above water so that a pH of the lithium-dissolved solution is from 7 to 10. The acid may be added at any period before, during and/or after the dissolution of lithium. The pH of the lithium-dissolved solution finally obtained is preferably from 7 to10.

This is because if the pH of the lithium-dissolved solution is less than 7, metals such as Co may begin to dissolve, and if it is more than 10, aluminum may begin to dissolve.

A method for bringing the battery powder into contact with the water includes various methods such as spraying, immersing, dipping, and the like. In terms of reaction efficiency, a method for immersing and stirring the battery powder in water is preferable.

A temperature of the solution during the contact of the battery powder with water can be from 10 °C to 60 °C. A pulp density can be from 50 g/L to 150 g/L. The pulp density means a ratio of dry weight (g) of the battery powder to an amount of water (L) that is brought into contact with the battery powder.

In the lithium dissolution step, a leaching rate of lithium in water is preferably from 30% to 70%, and more preferably from 45% to 55%. The lithium concentration of the lithium-dissolved solution is preferably from 1.0 g/L to 3.0 g/L, and more preferably from 1.5 g/L to 2.5 g/L. The lithium-dissolved solution may contain from 0 mg/L to 1000 mg/L of sodium and from 0 mg/L to 500 mg/L of aluminum.

The lithium-dissolved solution obtained in the lithium leaching step can be subjected to treatments such as solvent extraction, neutralization, and carbonation, thereby recovering lithium in the lithium-dissolved solution as lithium carbonate. The resulting lithium carbonate may optionally be purified to lower the impurity grade.

Residues that remain without being dissolved in water, of the battery powder, are removed by solid-liquid separation, and they can be then subjected to acid leaching, neutralization, solvent extraction or other treatments using known methods to recover various metals such as cobalt and nickel contained therein.

### EXAMPLES

Next, the method for heat-treating the vehicle battery pack waste as described above was experimentally carried out and the effects thereof were confirmed, as described below. However, the descriptions herein are merely for illustrative and are not intended to be limited.

The cases and the vehicle battery pack waste including the lithium ion batteries as batteries were subjected to the heat treatment by heating under the conditions as shown in Table 1. Here, the heat treatment was carried out while allowing the atmospheric gas containing mainly nitrogen and also oxygen to follow in the heat treatment furnace. In Examples 1 to 3, only the concentration of oxygen and oxygen partial pressure in the furnace were substantially changed. The conditions are shown in Table 1.

**[Table 1]**

| | Concentration of Oxygen | Oxygen Partial Pressure | Heat Treatment Temperature | Temperature Increasing Rate | Retention Time | Harmlessness | Improvement of Co and Ni Yield |
|---|---|---|---|---|---|---|---|
| Example 1 | 0.1 % | 0.001 atm | 600 °C | 80-100 °C/hr | 4 hr | ○ | ○ |
| Example 2 | 0.5% | 0.005 atm | 600 °C | 80-100 °C/hr | 4 hr | ○ | ○ |
| Example 3 | 1.0% | 0.01 atm | 600 °C | 80-100 °C/hr | 4 hr | ○ | ○ |

In each of Examples 1 to 3, the electrolytic solution in the lithium ion battery was evaporated and removed to provide harmlessness without bringing about an uncontrollable combustion state during the heat treatment.

Subsequently, the battery powder obtained by crushing, pulverizing/powdering and sieving was brought into contact with water, and two-stage lithium leaching was carried out at a pulp density of 50 g/L to 90 g/L. As a result, in each of Examples 1 to 3, the leaching rate of lithium was higher, which was about 50% to 60%. It is presumed from the results that in each Examples 1 to 3, the lithium in the vehicle battery pack waste was sufficiently converted to lithium carbonate by the heat treatment as described above.

Subsequently, the acid leaching, neutralization and solvent extraction were sequentially carried out on the lithium leached residues descried above to collect cobalt and nickel. Since the cobalt and nickel in the lithium ion battery were sufficiently reduced from the oxides by the above heat treatment, the collection rates of cobalt and nickel were relatively higher in all of Examples 1 to 3. However, in Example 3, since the oxygen partial pressure in the furnace was slightly higher during the heat treatment, the aluminum in the lithium ion battery became brittle, thereby slightly deteriorating the separation of aluminum during sieving, which required the removal of the aluminum, but a decrease in Co and Ni collection rate was slight. Based on the results, in Table 1, the improvement of Co and Ni collection rate in Example 3 is good "○", and the more preferable oxygen concentration is 0.1% to 1.0%.

## Claims

1. A method for heat-treating battery waste containing lithium, the method comprising:
allowing an atmospheric gas comprising oxygen and at least one selected from the group consisting of nitrogen, carbon dioxide and water vapor to flow in a heat treatment furnace in which the battery waste is arranged, and heating the battery waste while adjusting an oxygen partial pressure in the furnace.

2. The method for heat-treating battery waste according to claim 1, wherein the oxygen partial pressure in the furnace during heating is maintained in a range of 5 × 10⁻⁴ atm to 4 × 10⁻² atm.

3. The method for heat-treating battery waste according to claim 1 or 2, wherein an oxygen concentration in the atmospheric gas when it is introduced into the heat treatment furnace is 0.05% by volume to 4.00% by volume.

4. The method for heat-treating battery waste according to any one of claims 1 to 3, wherein a highest temperature of the battery waste during heating is 500 °C to 650 °C.

5. The method for heat-treating battery waste according to any one of claims 1 to 4, wherein the battery waste is a vehicle battery pack waste comprising: a case forming an exterior; and a battery surrounded by the case.

6. A method for recovering lithium from battery waste containing lithium, the method comprising:
a heat treatment step of heat-treating the battery waste by the method for heat-treating battery waste according to any one of claims 1 to 5; and
a lithium leaching step of leaching lithium in battery powder obtained from the battery waste after the heat treatment step by either a weakly acidic solution, water or an alkaline solution.
